(19) Europäisches Patentamt
European Patent Office
Office européen des brevets

(11) **EP 4 039 834 A1**

(12) **EUROPEAN PATENT APPLICATION**
published in accordance with Art. 153(4) EPC

(43) Date of publication:
**10.08.2022 Bulletin 2022/32**

(21) Application number: **19953057.7**

(22) Date of filing: **20.11.2019**

(51) International Patent Classification (IPC):
**C22B 1/02** (2006.01)          **C22B 59/00** (2006.01)

(52) Cooperative Patent Classification (CPC):
Y02P 10/20

(86) International application number:
**PCT/CN2019/119594**

(87) International publication number:
**WO 2021/097693 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Baotou Research Institute of Rare
Earths**
**Baotou, Inner Mongolia 014030 (CN)**

(72) Inventors:
• **XU, Yanhui**
**Baotou, Inner Mongolia 014030 (CN)**

• **CUI, Lingxiao**
**Baotou, Inner Mongolia 014030 (CN)**
• **ZHENG, Qiyuan**
**Baotou, Inner Mongolia 014030 (CN)**
• **MA, Shengfeng**
**Baotou, Inner Mongolia 014030 (CN)**
• **GUAN, Weihua**
**Baotou, Inner Mongolia 014030 (CN)**
• **GUO, Wenliang**
**Baotou, Inner Mongolia 014030 (CN)**
• **SONG, Jing**
**Baotou, Inner Mongolia 014030 (CN)**

(74) Representative: **Gong, Jinping**
**CocreateIP**
**Eggenfeldenerstraße 56**
**81929 München (DE)**

(54) **SMELTING METHOD FOR BASTNAESITE AND USE OF CARBON POWDER**

(57)     The present disclosure relates to use of a carbon powder in preventing oxidation of cerium (III) in calcination of bastnaesite, and also relates to a smelting method for bastnaesite. The smelting method comprises calcining a mixture containing a carbon powder and bastnaesite by microwave heating to give a calcination product, wherein the carbon powder accounts for 5-25 wt% of the weight of the bastnaesite. The method is capable of effectively preventing the oxidation of cerium (III).

EP 4 039 834 A1

**Description**

TECHNICAL FIELD OF THE DISCLOSURE

The present disclosure relates to use of a carbon powder in preventing oxidation of cerium (III) in the calcination of bastnaesite, and also relates to a smelting method for bastnaesite.

BACKGROUND OF THE DISCLOSURE

Bastnaesite is one of important rare earth minerals. Bastnaesite, when calcined in air, is decomposed into rare earth oxides and rare earth fluorides. During the calcination, $Ce^{3+}$ in bastnaesite is easily oxidized to $Ce^{4+}$. $Ce^{4+}$ needs to be reduced by a large quantity of a reducing agent to $Ce^{3+}$ or metal cerium in subsequent applications. In addition, when the product from calcining bastnaesite is dissolved with a concentrated hydrochloric acid solution, $Ce^{4+}$ would oxidize chloride ions in the hydrochloric acid solution to gaseous chlorine. The ensuing chlorine escape would incur air pollution and do harm to the health of the operator.

CN1071205A discloses a method for preparing a rare earth silicon-carbon-iron alloy by carbothermic reduction of bastnasite. The method comprises: calcining bastnaesite to give a calcination product and mixing the calcination product, a carbonaceous reducing agent, and a binder to form rare earth pellets; and blending the rare earth pellets, silica, and a carbonaceous reducing agent and smelting them to give a silicon-carbon-iron alloy. CN107760869A discloses a preparation method of a rare earth silicon-iron alloy. The method comprises: calcining bastnaesite, adding a coke powder and a charcoal powder to the calcination product, and grinding the mixture to a mixed powder; making rare earth pellets out of the mixed powder and a binder; and blending the rare earth pellets, silica, coke and steel, and smelting them to give a rare earth ferrosilicon alloy. In the methods described above, bastnaesite is calcined alone, which makes it extremely easy for $Ce^{3+}$ to be oxidized to $Ce^{4+}$. It is the objective of the methods described above to prepare a silicon-carbon-iron alloy by employing an excessive amount of a carbonaceous reducing agent.

Xiaojuan XU developed a microwave-assisted fluorine-fixation bastnasite calcination process. The process comprises: adding 1 wt% of activated carbon to bastnaesite, and then adding calcium oxide, calcium chloride and sodium chloride, bending them and pressing them into tablets, and calcining the tablets in a microwave oven (see Experimental Study on Microwave-Assisted Fluorine-Fixation Bastnaesite Calcination, Xiaojuan XU, et al., Rare Earth, Vol. 39, No. 4, pp. 96-102, August 2018). In the process, the very small amount of the added activated carbon and the various fluxes make it impossible for activated carbon to inhibit oxidation of $Ce^{3+}$ to $Ce^{4+}$.

SUMMARY OF THE DISCLOSURE

In view of the above, a first objective of the present disclosure is to provide use of a carbon powder in preventing oxidation of cerium (III) in calcination of bastnaesite.

A second objective of the present disclosure is to provide a smelting method for bastnaesite. The method is capable of effectively preventing oxidation of cerium (III) in calcination of bastnaesite.

To accomplish the above objectives, the present disclosure takes technical solutions described below.

According to one aspect of the present disclosure, there is provided use of a carbon powder in preventing oxidation of cerium (III) in calcination of bastnaesite.

According to the use of the present disclosure, preferably, the carbon powder accounts for 5-25 wt % of the weight of the bastnaesite.

According to the use of the present disclosure, preferably, a mixture containing the carbon powder and the bastnaesite is calcined by microwave heating.

According to the use of the present disclosure, preferably, the mixture contains only the carbon powder and the bastnaesite.

According to the use of the present disclosure, preferably, the carbon powder is one or more selected from the group consisting of activated carbon, coke, and charcoal, and the calcination is performed at a temperature of 800-1200 °C for a duration of 10-60 minutes.

According to another aspect of the present disclosure, there is provided a smelting method for bastnaesite, comprising:

calcining a mixture containing a carbon powder and bastnaesite by microwave heating to give a calcination product, wherein the carbon powder accounts for 5-25 wt% of the weight of the bastnaesite.

According to the smelting method of the present disclosure, preferably, the mixture only contains the carbon powder and the bastnaesite.

According to the smelting method of the present disclosure, preferably, calcining the mixture is performed at a temperature of 800-1200 °C for a duration of 10-60 minutes.

According to the smelting method of the present disclosure, preferably, the carbon powder is one or more selected from the group consisting of activated carbon, coke, and charcoal.

The smelting method of the present disclosure preferably further comprises:
dissolving the calcination product with an inorganic acid solution having a concentration of 0.5-6 mol/L, wherein the inorganic acid is selected from hydrochloric acid or sulfuric acid.

The present disclosure can effectively prevent the oxidation of cerium (III) in bastnaesite by mixing an appropriate amount of a carbon powder with the bastnaesite and heating the mixture by microwaves. Also, smelting bastnaesite by the method of the present disclosure results in a low cerium (III) oxidation rate.

## DETAIL DESCRIPTION OF THE DISCLOSURE

The present disclosure will be further explained by means of embodiments, but the protection scope of the present disclosure is not limited thereto.

In the present disclosure, a rare earth oxide (REO) content refers to a percentage by mass of a rare earth oxide in bastnaesite.

In the present disclosure, cerium (III) refers to trivalent cerium, which can be represented by $Ce^{3+}$. Cerium (IV) refers to tetravalent cerium, which can be represented by $Ce^{4+}$.

< Use of Preventing **Oxidation of Cerium** (III)>

In bastnaesite, cerium exists primarily in the trivalent form ($Ce^{3+}$). Calcination can convert bastnaesite into rare earth oxides and rare earth fluorides. During the calcination, however, $Ce^{3+}$ in bastnaesite is very easily oxidized to $Ce^{4+}$. Thus, if no additive else is added in the calcination of bastnaesite, the calcination will generate a large amount of $Ce^{4+}$, which is unfavorable to a subsequent processing. First, a large amount of a reducing agent is needed to reduce $Ce^{4+}$ to $Ce^{3+}$ or metal cerium, and second, $Ce^{4+}$ easily oxidizes hydrochloric acid used to dissolve a calcination product, thereby producing a large amount of gaseous chlorine.

The inventors of the present disclosure have discovered for the first time that a carbon powder can prevent the oxidation of cerium (III) during the calcination of bastnaesite and thus completed the present disclosure. The so-called "calcination of bastnaesite" refers to the process of calcining bastnaesite with the aim to acquire rare earth oxides and rare earth fluorides.

The present disclosure provides use of a carbon powder in preventing the oxidation of cerium (III) in the calcination-and thus the decomposition-of bastnaesite. In the present disclosure, preventing the oxidation of cerium (III) means preventing $Ce^{3+}$ in bastnaesite from being oxidized to $Ce^{4+}$ during the calcination. Unexpectedly, the inventors have discovered that calcining a mixture containing an appropriate amount of a carbon powder and bastnaesite can prevent $Ce^{3+}$ from being oxidized to $Ce^{4+}$ during the calcination. Preferably, calcining the mixture by microwave heating can further prevent $Ce^{3+}$ from being oxidized to $Ce^{4+}$ during the calcination. According to one embodiment of the present disclosure, a mixture containing a carbon powder and bastnasite is calcined by microwave heating. Microwave heating means heating the mixture using microwaves. Microwave heating can be carried out in a microwave muffle furnace.

The calcination in the present disclosure can be carried out in air. The mixture in the present disclosure contains a carbon powder and bastnaesite, and can further contain other substance. The other substance can exclude a flux and the like. Preferably, the other substance can exclude calcium oxide, calcium chloride, and sodium chloride. According to one embodiment of the present disclosure, the mixture in the present disclosure consists of a carbon powder and bastnaesite.

Bastnaesite has an inferior microwave absorption capability, whereas a carbon powder has a high microwave absorption capability. The present disclosure benefits from such a property. First, microwaves lead to spontaneous heating of the carbon powder, and then the heat is transferred to bastnaesite and makes it thermally decomposed. The carbon powder, after heating up rapidly, reacts preferentially with the surrounding air and generates carbon monoxide and carbon dioxide, thereby consuming oxygen around bastnaesite. Carbon dioxide, due to having a density greater than that of oxygen, surrounds the bastnaesite particles; carbon monoxide, having a density less than that of oxygen, inhibits the external oxygen from diffusing towards a surface of bastnaesite while carbon monoxide is escaping. This can effectively prevent $Ce^{3+}$ in bastnaesite from being oxidized to $Ce^{4+}$.

In the present disclosure, the carbon powder is employed in an amount of 5-25 wt % of the weight of the bastnaesite. Preferably, the amount of the carbon powder is 10-25 wt % of the weight of the bastnaesite. More preferably, the amount of the carbon powder is 20-25 wt % of the weight of the bastnaesite. These amounts make it possible to effectively prevent cerium (III) from being oxidized and ensure a high rare earth leaching rate.

During the calcination of bastnaesite, the temperature can be 800-1200 °C, preferably 900-1150 °C, and more preferably 1000-1100 °C. These temperatures are beneficial to oxidation of the carbon powder and decomposition of bastnasite, thereby making it possible to more effectively prevent cerium (III) from being oxidized and improve the rare earth leaching rate. The duration of the calcination can be 10-60 minutes, preferably 20-40 minutes, and more preferably 20-30 minutes. The duration of the calcination refers to a time for which the calcination is continued after the calcination has reached a preset temperature. These durations make it possible for bastnaesite to be fully decomposed while avoiding the oxidation of cerium (III) caused by an otherwise excessive calcination.

According to one embodiment of the present disclosure, the calcination is carried out at a temperature of 800-1200 °C for a duration of 10-60 minutes. According to another embodiment of the present disclosure, the calcination is carried out at a temperature of 900-1150 °C for a duration of 20-40 minutes. According to yet another embodiment of the present disclosure, the calcination is carried out at a temperature of 1000-1100 °C for a duration of 20-40 minutes.

In the present disclosure, the carbon powder can be one or more selected from the group consisting of activated carbon, coke, and charcoal. Preferably, the carbon powder is selected from at least one of activated carbon or coke. More preferably, the carbon powder is activated carbon. This can effectively prevent cerium (III) from being oxidized.

In the present disclosure, bastnaesite can be a bastnaesite concentrate or pure bastnaesite. The bastnaesite concentrate has a bastnaesite purity of 90 wt% or more, preferably 92 wt% or more, and more preferably 97 wt% or more. In the present disclosure, the bastnaesite purity refers to a percentage by mass of $Ce(CO_3)F$ or $(Ce,La)[CO_3]F$ in the bastnaesite concentrate. Bastnaesite has a rare earth oxide (REO) content of 50 wt % or more, preferably 55-70 wt %, and more preferably 55-65 wt %. This can effectively prevent cerium (III) from being oxidized.

According to one embodiment of the present disclosure, the carbon powder is one or more selected from the group consisting of activated carbon, coke, and charcoal; the calcination is carried out at a temperature of 800-1200 °C for a duration of 10-60 minutes. According to another embodiment of the present disclosure, the carbon powder is one or more selected from the group consisting of activated carbon, coke, and charcoal; the calcination is carried out at a temperature of 900-1050 °C for a duration of 20-40 minutes.

**<Smelting Method>**

The smelting method for bastnaesite of the present disclosure comprises a calcination step, and optionally, a dissolution step. The smelting method is hereinafter described in detail.

The calcination step comprises calcining a mixture containing a carbon powder and bastnaesite by microwave heating to give a calcination product. The calcination step in the present disclosure can be carried out in air. Microwave heating means heating the mixture using microwaves. Microwave heating can be carried out in a microwave muffle furnace.

In the present disclosure, bastnaesite can be a bastnaesite concentrate or pure bastnaesite. The bastnaesite concentrate has a bastnaesite purity of 90 wt% or more, preferably 92 wt% or more, and more preferably 97 wt% or more. In the present disclosure, the bastnaesite purity refers to a percentage by mass of $Ce(CO_3)F$ or $(Ce,La)[CO_3]F$ in the bastnaesite concentrate. Bastnaesite has a rare earth oxide (REO) content of 50 wt % or more, preferably 55-70 wt %, and more preferably 55-65 wt %. This can effectively prevent cerium (III) from being oxidized.

In the present disclosure, the carbon powder can be one or more selected from the group consisting of activated carbon, coke, and charcoal. Preferably, the carbon powder is selected from at least one of activated carbon or coke. More preferably, the carbon powder is activated carbon. This can effectively prevent cerium (III) from being oxidized.

The mixture in the present disclosure contains a carbon powder and bastnaesite, and can further contain other substance. The other substance can exclude a flux and the like. Preferably, the other substance can exclude calcium oxide, calcium chloride, and sodium chloride. According to one embodiment of the present disclosure, the mixture in the present disclosure consists of a carbon powder and bastnaesite.

In the present disclosure, the carbon powder is employed in an amount of 5-25 wt % of the weight of the bastnaesite. Preferably, the amount of the carbon powder is 10-25 wt % of the weight of the bastnaesite. More preferably, the amount of the carbon powder is 20-25 wt % of the weight of the bastnaesite. These amounts make it possible to effectively prevent cerium (III) from being oxidized and ensure a high rare earth leaching rate.

During the calcination of bastnaesite, the temperature can be 800-1200 °C, preferably 900-1150 °C, and more preferably 1000-1100 °C. These temperatures are beneficial to oxidation of the carbon powder and decomposition of bastnasite, thereby making it possible to more effectively prevent cerium (III) from being oxidized to $Ce^{4+}$ and improve the rare earth leaching rate.

The duration of the calcination can be 10-60 minutes, preferably 20-40 minutes, and more preferably 20-30 minutes. The duration of the calcination refers to a time for which the calcination is continued after the calcination has reached a preset temperature. These durations make it possible for bastnaesite to be fully decomposed while avoiding the oxidation of cerium (III) caused by an otherwise excessive calcination.

According to one embodiment of the present disclosure, the calcination is carried out at a temperature of 800-1200 °C for a duration of 10-60 minutes. According to another embodiment of the present disclosure, the calcination is carried out at a temperature of 900-1150 °C for a duration of 20-40 minutes. According to yet another embodiment of the present disclosure, the calcination is carried out at a temperature of 1000-1100 °C for a duration of 20-40 minutes.

According to one embodiment of the present disclosure, the carbon powder is one or more selected from the group consisting of activated carbon, coke, and charcoal; the calcination is carried out at a temperature of 900-1150 °C for a duration of 20-40 minutes.

The calcination product is dissolved with an inorganic acid solution to obtain a rare earth salt solution. According to one embodiment of the present disclosure, the calcination product is dissolved with an inorganic acid solution having a concentration of 0.5-6 mol/L. The inorganic acid may be selected from sulfuric acid or hydrochloric acid. The inorganic acid solution can have a concentration of 0.5-6 mol/L, preferably 1-4 mol/L, and more preferably 2-3 mol/L.

In the examples and comparative examples described below, the rare earth leaching rate and cerium (III) oxidation rate are obtained by the following methods:

Rare Earth Leaching Rate:

A rare earth leaching solution is obtained by dissolving 2 g of a calcination product in 50 ml of a $H_2SO_4$ solution having a concentration of 3 mol/L. The rare earth leaching solution is heated in an electric furnace to slightly boil and is kept in the boiling state for 30 min. After being cooled to room temperature, the solution is subjected to suction filtration. The REO content of the filtrate is determined, and the rare earth leaching rate is calculated.

The rare earth leaching rate is calculated by the following formula:

$$\mu = \frac{C \times V}{\omega \times m} \times 100\%$$

where $\mu$ is the rare earth leaching rate (%); C is the concentration (g/L) of rare earth sulfates in the filtrate, calculated based on the REO; V is the volume (L) of the filtrate; $\omega$ is the content (wt%) of rare earth compounds in bastnaesite, calculated based on the REO; m is the mass (g) of bastnaesite.

Cerium (III) Oxidation Rate:

The cerium oxidation rate is expressed by a percentage by weight of $Ce^{3+}$ oxidized to $Ce^{4+}$. The method for obtaining the cerium oxidation rate is as follows:

A rare earth leaching solution is obtained by dissolving 2 g of a calcination product in 50 ml of a $H_2SO_4$ solution having a concentration of 3 mol/L. The rare earth leaching solution is heated in an electric furnace to slightly boil and is kept in the boiling state for 30 min. After being cooled to room temperature, the solution is subjected to suction filtration. The Ce (IV) content of the filtrate is determined, and the cerium oxidation rate is calculated.

The cerium oxidation rate is calculated by the following formula:

$$\eta = \frac{C_{Ce4} \times V}{\omega \times m \times \delta_{Ce}} \times 100\%$$

where $\eta$ is the cerium (III) oxidation rate (%); $C_{Ce4}$ is the concentration (g/L) of cerium (IV) sulfate in the filtrate, calculated based on the REO; V is the volume (L) of the filtrate; $\omega$ is the content (wt%) of rare earth compounds in bastnaesite, calculated based on the REO; m is the mass (g) of bastnasite; $\delta_{Ce}$ is the content (wt%) of cerium oxides in the REO in bastnaesite.

In the following examples and comparative examples, the calcination was carried out in a microwave muffle furnace in air.

Example 1

100 g of bastnaesite (having a REO content of 65 wt %) and 20 g of activated carbon were mixed. The mixture was heated to 1000 °C by microwaves and calcined for 40 minutes, and thereby a calcination product was obtained.

The calcination product was cooled to room temperature and dissolved with a hydrochloric acid solution having a concentration of 3 mol/L, and thus rare earth chlorides were obtained. No gaseous chlorine was found to escape during the process.

The rare earth leaching rate and the cerium oxidation rate (the percentage by weight of $Ce^{3+}$ oxidized to $Ce^{4+}$, the same being true of the remaining examples) were measured, and the results are shown in Table 1.

Example 2

100 g of bastnaesite (having a REO content of 57 wt %) and 20 g of activated carbon were mixed. The mixture was heated to 1050 °C by microwaves and calcined for 20 minutes, and thereby a calcination product was obtained.

The calcination product was cooled to room temperature and dissolved with a hydrochloric acid solution having a concentration of 3 mol/L, and thus rare earth chlorides were obtained. No gaseous chlorine was found to escape during the process.

The rare earth leaching rate and the cerium oxidation rate were measured, and the results are shown in Table 1.

Example 3

100 g of bastnaesite (having a REO content of 60 wt %) and 20 g of activated carbon were mixed. The mixture was heated to 900 °C by microwaves and calcined for 20 minutes, and thereby a calcination product was obtained.

The calcination product was cooled to room temperature and dissolved with a hydrochloric acid solution having a concentration of 3 mol/L, and thus rare earth chlorides were obtained. No gaseous chlorine was found to escape during the process.

The rare earth leaching rate and the cerium oxidation rate were measured, and the results are shown in Table 1.

Example 4

100 g of bastnaesite (having a REO content of 57 wt %) and 20 g of coke were mixed. The mixture was heated to 1150 °C by microwaves and calcined for 40 minutes, and thereby a calcination product was obtained.

The calcination product was cooled to room temperature and dissolved with a sulfuric acid solution having a concentration of 3 mol/L, and thus rare earth sulfates were obtained.

The rare earth leaching rate and the cerium oxidation rate were measured, and the results are shown in Table 1.

Example 5

100 g of bastnaesite (having a REO content of 65 wt %) and 25 g of coke were mixed. The mixture was heated to 1100 °C by microwaves and calcined for 30 minutes, and thereby a calcination product was obtained.

The calcination product was cooled to room temperature and dissolved with a sulfuric acid solution having a concentration of 3 mol/L, and thus rare earth sulfates were obtained.

The rare earth leaching rate and the cerium oxidation rate were measured, and the results are shown in Table 1.

Comparative Example 1

100 g of bastnaesite (having a REO content of 65 wt %) and 1 g of activated carbon were mixed. The mixture was heated to 1000 °C by microwaves and calcined for 40 minutes, and thereby a calcination product was obtained.

The calcination product was cooled to room temperature and dissolved with a hydrochloric acid solution having a concentration of 3 mol/L, and thus rare earth chlorides were obtained. Some gaseous chlorine was found to escape during the process.

The rare earth leaching rate and the cerium oxidation rate were measured, and the results are shown in Table 1. As shown in Table 1, the small amount of activated carbon led to a high cerium oxidation rate.

Comparative Example 2

100 g of bastnaesite (having a REO content of 65 wt %) and 30 g of activated carbon were mixed. The mixture was heated to 1000 °C by microwaves and calcined for 40 minutes, and thereby a calcination product was obtained.

The calcination product was cooled to room temperature and dissolved with a hydrochloric acid solution having a concentration of 3 mol/L, and thus rare earth chlorides were obtained.

The rare earth leaching rate and the cerium oxidation rate were measured, and the results are shown in Table 1. As shown in Table 1, the excessive amount of activated carbon led to a low rare earth leaching rate.

Comparative Example 3

100 g of bastnaesite (having a REO content of 65 wt %) and 20 g of activated carbon were mixed. The mixture was put into an electrically heated muffle furnace and calcined at 1000 °C for 40 minutes, and thereby a calcination product was obtained. The calcination product was cooled to room temperature and dissolved with a hydrochloric acid solution having a concentration of 3 mol/L, and thus rare earth chlorides were obtained. Much gaseous chlorine was found to escape during the process. The rare earth leaching rate and the cerium oxidation rate were measured, and the results are shown in Table 1. As shown in Table 1, the different heating method led to a low rare earth leaching rate and a high cerium oxidation rate.

Table 1

| Example No. | Rare Earth Leaching Rate (wt%) | Cerium (III) Oxidation Rate (wt%) |
|---|---|---|
| Example 1 | 96.0 | 0.3 |
| Example 2 | 97.4 | 0.2 |
| Example 3 | 97.0 | 0.1 |
| Example 4 | 96.5 | 0.4 |
| Example 5 | 98.3 | 0.1 |
| Comparative Example 1 | 90.6 | 93.4 |
| Comparative Example 2 | 95.1 | 0.3 |
| Comparative Example 3 | 89.5 | 93.2 |

The present disclosure is not limited to the embodiments described above. Any variation, modification, and replacement of the disclosed embodiments which those skilled in the art can think of and which do not depart from the essence of the present disclosure fall within the scope of the present disclosure.

**Claims**

1. Use of a carbon powder in preventing oxidation of cerium (III) in calcination of bastnaesite.

2. The use according to claim 1, wherein the carbon powder accounts for 5-25 wt % of the weight of the bastnaesite.

3. The use according to claim 1, wherein a mixture containing the carbon powder and the bastnaesite is calcined by microwave heating.

4. The use according to claim 3, wherein the mixture contains only the carbon powder and the bastnaesite.

5. The use according to claim 1, wherein the carbon powder is one or more selected from the group consisting of activated carbon, coke, and charcoal, and the calcination is performed at a temperature of 800-1200 °C for a duration of 10-60 minutes.

6. A smelting method for bastnaesite, comprising:
   calcining a mixture containing a carbon powder and bastnaesite by microwave heating to give a calcination product, wherein the carbon powder accounts for 5-25 wt% of the weight of the bastnaesite.

7. The smelting method according to claim 6, wherein the mixture only contains the carbon powder and the bastnaesite.

8. The smelting method according to claim 7, wherein calcining the mixture is performed at a temperature of 800-1200 °C for a duration of 10-60 minutes.

9. The smelting method according to claim 7, wherein the carbon powder is one or more selected from the group consisting of activated carbon, coke, and charcoal.

10. The smelting method according to claim 7 further comprising:
    dissolving the calcination product with an inorganic acid solution having a concentration of 0.5-6 mol/L, wherein the inorganic acid is selected from hydrochloric acid or sulfuric acid.

## INTERNATIONAL SEARCH REPORT

| International application No. |
| --- |
| **PCT/CN2019/119594** |

### A. CLASSIFICATION OF SUBJECT MATTER

C22B 1/02(2006.01)i; C22B 59/00(2006.01)i

According to International Patent Classification (IPC) or to both national classification and IPC

### B. FIELDS SEARCHED

Minimum documentation searched (classification system followed by classification symbols)

C22B

Documentation searched other than minimum documentation to the extent that such documents are included in the fields searched

Electronic data base consulted during the international search (name of data base and, where practicable, search terms used)

CNTXT, CNABS, DWPI, WOTXT, EPTXT, USTXT, ISI WEB OF SCIENCE, 中国期刊网全文数据库, 万方数据库: 包头稀土研究院, 许延辉, 崔凌霄, 郑淇元, 马升峰, 关卫华, 郭文亮, 宋静, 氟碳铈, 铈矿, 铈, 碳粉, 炭粉, 焦炭, 木炭, 活性炭, 碳, 焙烧, 阻止, 防止, 预防, 氧化, 还原, 微波, fluorine, carbon, cerium+, F, C, Ce, powder, reduc+, bastnadite, prevent+, oxid +, roast+, ore+, microwave

### C. DOCUMENTS CONSIDERED TO BE RELEVANT

| Category* | Citation of document, with indication, where appropriate, of the relevant passages | Relevant to claim No. |
| --- | --- | --- |
| Y | CN 1384214 A (LU, Yuan) 11 December 2002 (2002-12-11)<br>description, p. 1, last paragraph, p. 2, paragraph 1, p. 3, paragraph 4, and p. 4, paragraph 5 | 1-10 |
| Y | CN 105755279 A (NORTHEASTERN UNIVERSITY) 13 July 2016 (2016-07-13)<br>description, paragraphs [0007]-[0010] | 1-10 |
| Y | CN 109280781 A (LI, Hongming) 29 January 2019 (2019-01-29)<br>description, paragraphs [0005-0011] | 1-10 |
| Y | CN 1202460 A (GE, Xinfang) 23 December 1998 (1998-12-23)<br>description, page 1, paragraphs 4-12 | 1-10 |
| A | CN 1071205 A (NORTH-EAST POLYTECH. COLLEGE) 21 April 1993 (1993-04-21)<br>entire description | 1-10 |
| A | KR 101411926 B1 (KOREA INST. CERAMIC ENG. & TECHNOLOGY et al.) 26 June 2014 (2014-06-26)<br>entire description | 1-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 July 2020** | **18 August 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/119594**

| Patent document cited in search report | | | Publication date (day/month/year) | Patent family member(s) | | | Publication date (day/month/year) |
|---|---|---|---|---|---|---|---|
| CN | 1384214 | A | 11 December 2002 | CN | 1240858 | C | 08 February 2006 |
| CN | 105755279 | A | 13 July 2016 | CN | 105755279 | B | 11 August 2017 |
| CN | 109280781 | A | 29 January 2019 | | None | | |
| CN | 1202460 | A | 23 December 1998 | CN | 1077546 | C | 09 January 2002 |
| CN | 1071205 | A | 21 April 1993 | CN | 1025052 | C | 15 June 1994 |
| KR | 101411926 | B1 | 26 June 2014 | KR | 20130136631 | A | 13 December 2013 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1071205 A

- CN 107760869 A

**Non-patent literature cited in the description**

- **XIAOJUAN XU et al.** Experimental Study on Microwave-Assisted Fluorine-Fixation Bastnaesite Calcination. *Rare Earth,* August 2018, vol. 39 (4), 96-102